# FASCICULE DE BREVET EUROPEEN

(11) **EP 2 906 411 B1**
(45) Date de publication et mention de la délivrance du brevet: **04.07.2018**
(21) Numéro de dépôt: 13776780.2
(22) Date de dépôt: 10.10.2013
(51) Int. Cl.: B29C 70/32, F16C 7/02, B29L 31/06, B29C 53/60

(54) **PROCEDE DE FABRICATION D'UNE BIELLE MONOBLOC**
HERSTELLUNGSVERFAHREN FÜR EINE EINSTÜCKIGE PLEUELSTANGE
PRODUCTION METHOD OF A ONE PIECE CONNECTING ROD

(30) Priorité: 11.10.2012 BE 201200688
(43) Date de publication de la demande: 19.08.2015
(73) Titulaire: BD Invent SA, 4682 Heure-Le-Romain (BE)
(72) Inventeur: BOVEROUX, Benoît, B-4000 Rocourt (BE); DARDENNE, Daniel, B-4682 Heure-Le-Romain (BE)
(74) Mandataire: Pronovem
(86) Numéro de dépôt international: PCT/EP2013/071205
(87) Numéro de publication internationale: WO 2014/057058

(56) Documents cités:
- EP-A1- 0 626 250
- WO-A1-2008/066606
- WO-A1-2010/084286
- WO-A1-2012/017601
- WO-A2-2010/149768

## Description

### Objet de l'invention

La présente invention se rapporte à un procédé de fabrication de bielles composites. Elle se rapporte plus particulièrement mais non exclusivement à un procédé de fabrication de bielles utilisables dans le domaine aéronautique et aérospatial.

### Etat de la technique

Il est connu qu'une bielle est un composant soit raidissant, soit de transmission de mouvement. Les efforts qui vont être transmis par la bielle sont principalement des efforts de traction, de compression et de flexion sur base du couple résistif en bout de bielle.

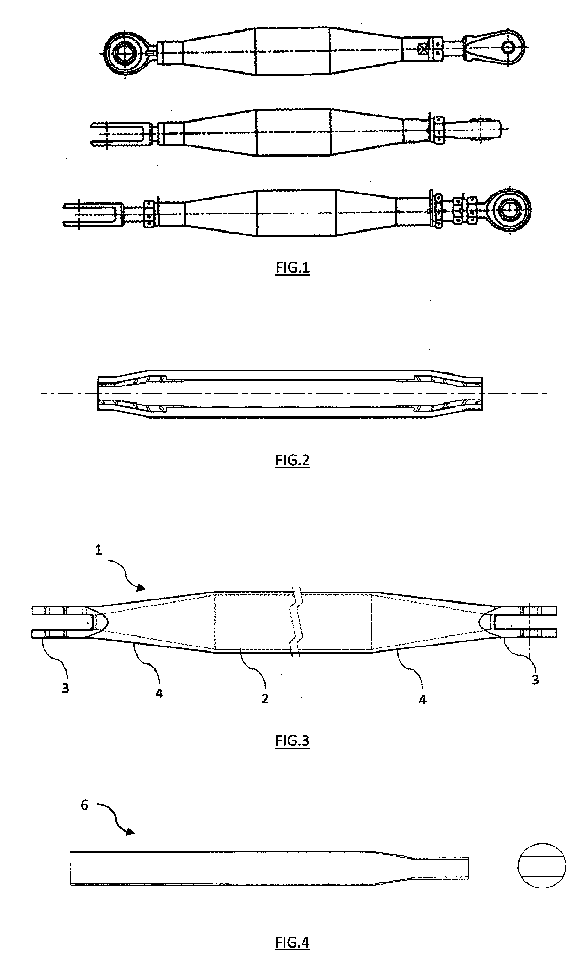

Dans le domaine aéronautique, on fait usage d'un nombre élevé de bielles. On peut citer l'utilisation de bielles dans les organes de commande de vol, du train d'atterrissage, d'ouverture des portes, etc. A titre illustratif, la figure 1 représente un schéma général de bielles avec différents moyens de fixation aux extrémités; ces moyens assurent la fixation de la bielle aux organes auxquels elle doit transmettre un mouvement ou desquels elle doit recevoir un mouvement ou assurer une fixation.

La bielle est un composant qui doit remplir plusieurs critères. Elle doit pouvoir résister à des variations thermiques importantes, la bielle étant soumise à des températures oscillant entre -55 et 120°C. Elle doit également avoir un rapport tenue mécanique/poids le plus élevé possible.

Dans leur conception la plus commune, les bielles sont réalisées en aluminium ou en inox mais il existe également sur le marché des bielles en matériau composite.

Le document WO 2010/149768 A2 décrit un procédé de fabrication d'une bielle composite par enroulement filamentaire. Selon ce procédé, un corps intérieur est réalisé par enroulement de fibres pré-imprégnées autour d'un mandrin extractible. Des embouts destinés à accueillir les moyens de fixation sont ensuite rapportés aux extrémités du corps intérieur. Un corps extérieur est alors réalisé par enroulement filamentaire autour du corps intérieur et des embouts. Finalement, les deux corps sont polymérisés pour former un corps d'un seul tenant sans discontinuité et porosité à l'interface grâce à l'utilisation d'une même fibre pré-imprégnée pour la réalisation du corps intérieur et du corps extérieur. Une bielle obtenue selon le procédé de la demande WO 2010/149768 A2 est représentée à la figure 2 où on peut voir le corps de bielle d'un seul tenant enserrant les embouts à ses extrémités, les embouts étant taraudés pour permettre le vissage ultérieur des moyens de fixation.

L'homogénéité de matière au sein du corps de bielle selon le document WO 2010/149768 A2 permet de réaliser un corps exempt de tout problème de dilatation différentielle lors de variations thermiques. Ce procédé a cependant pour inconvénient que les embouts sont rapportés lors de la fabrication et ne font donc pas partie intégrante du corps de bielle. Cela a pour conséquence que des problèmes de dilatation différentielle peuvent apparaître à l'usage entre le corps de bielle et les embouts. Ils vont se traduire par l'apparition de fissures et de décollements à l'interface. En outre, dans le cas où les embouts et le corps de bielle sont réalisés en matériau composite avec des résines différentes, des problèmes de contamination et de vieillissement peuvent également apparaître.

Le document EP 0 626 250 A1 décrit un procédé de fabrication d'une bielle monobloc en composite intégrant les moyens de fixation. Le procédé comprend des étapes de placement de fibres pré-imprégnées par enroulement filamentaire et par drapage. Ce procédé présente plusieurs inconvénients. Tout d'abord, il nécessite un mandrin fusible, et donc la réalisation d'un nouveau mandrin pour chaque bielle. De plus, à cause de la mauvaise tenue mécanique du mandrin fusible, il n'est pas possible de réaliser des bielles avec un faible rapport diamètre/longueur et avec des fourches ayant un faible entraxe. Ensuite, il nécessite des films de colle et des tissus de verre entre certaines couches de fibres, la structure n'étant dès lors pas homogène. Finalement, il présente aussi pour désavantage qu'il requière des étapes de compactage et polymérisation sous autoclave.

De même, le document WO 2010/084286 A1 divulgue un procédé de fabrication par enroulement filamentaire d'une pièce composite nécessitant un noyau fusible.

On connaît également du document WO 2008/066606 A1 un procédé de fabrication d'une bielle par drapage. Le procédé de drapage présente pour désavantage qu'il ne permet pas un placement de la fibre aussi précis que dans le cas d'un enroulement filamentaire. Ainsi aux extrémités de section réduite de la bielle, il est nécessaire de faire des découpes pour pouvoir positionner les plis au plus près de la partie à couvrir. De même lors du compactage des plis, un déplacement de la fibre peut être observé. Ce mauvais placement de la fibre aura un impact négatif sur la répartition des efforts en utilisation entre la résine et la fibre. Le drapage étant également une opération principalement manuelle, il ne peut être garanti que la pose des fibres, et donc les propriétés mécaniques, seront parfaitement identiques d'une bielle à l'autre ; ce manque de répétabilité des propriétés mécaniques étant extrêmement préjudiciable dans le secteur aéronautique.

### Buts de l'invention

La présente invention vise à réaliser des bielles monoblocs où les moyens de fixation sont intégrés au corps de bielle.

Elle vise ainsi à réaliser des bielles présentant une structure parfaitement homogène, dépourvue de toute porosité ou discontinuité et répondant aux critères de tenue mécanique et thermique.

Elle vise en outre à réaliser une bielle à partir d'un procédé ne nécessitant pas de noyau fusible et ce, par enroulement filamentaire.

### Principaux éléments caractéristiques de l'invention

La présente invention se rapporte à un procédé de fabrication d'une bielle comprenant les étapes de:
- mise à disposition d'un mandrin ;
- réalisation d'un corps intérieur par:
   - fabrication d'une première pièce par enroulement de fibres pré-imprégnées autour dudit mandrin;
   - retrait du mandrin;
   - assemblage de la première pièce avec une seconde pièce;
- réalisation d'un corps extérieur par enroulement de fibres pré-imprégnées autour dudit corps intérieur, lesdites fibres pré-imprégnées étant identiques à celles utilisées lors de la fabrication de la première pièce;
- réalisation d'un corps monobloc par polymérisation de l'ensemble formé du corps intérieur et du corps extérieur;
- usinage d'un élément de fixation à une extrémité du corps monobloc.

Selon des modes particuliers de l'invention, le procédé comporte au moins une ou une combinaison appropriée des caractéristiques suivantes :
- la seconde pièce est également réalisée par enroulement de fibres pré-imprégnées autour dudit mandrin, lesdites fibres pré-imprégnées étant identiques à celles utilisées lors de la fabrication de la première pièce et du corps extérieur;
- il comprend une étape de réalisation d'un épaulement dans la seconde pièce, ledit épaulement servant d'appui lors de l'assemblage avec la première pièce;
- un tube est inséré dans la seconde pièce pour former l'épaulement, ledit tube étant fabriqué par la méthode d'enroulement filamentaire utilisant des fibres pré-imprégnées identiques à celles utilisées pour le corps intérieur et le corps extérieur;
- le tube est revêtu d'une couche de résine avant insertion dans la seconde pièce, ladite résine étant identique à celle des fibres pré-imprégnées utilisées lors de la réalisation des corps intérieur et extérieur;
- au moins la première pièce est partiellement polymérisée avant assemblage;
- des couches supplémentaires de fibres pré-imprégnées sont enroulées sur une extrémité ou les deux extrémités du corps intérieur lors de la réalisation du corps extérieur;
- il comprend une étape d'usinage d'un élément de fixation à l'autre extrémité du corps monobloc;
- la seconde pièce est un embout muni d'un épaulement servant d'appui lors de l'assemblage avec la première pièce;
- l'angle d'enroulement filamentaire est variable le long du corps intérieur lors de la réalisation du corps extérieur;
- le mandrin comporte une partie cylindrique reliée à une partie de section rectangulaire par une partie de raccordement.

La présente description se rapporte également à une bielle comportant un corps de bielle reliant deux têtes de bielle, une des têtes de bielle étant un élément de fixation, caractérisée en ce que le corps de bielle et l'élément de fixation forment un ensemble monobloc réalisé dans un seul et unique matériau composite.

Selon des modes particuliers la bielle comporte au moins une ou une combinaison appropriée des caractéristiques suivantes:
- l'autre tête de bielle est également un élément de fixation, le corps de bielle et les deux têtes de bielle formant ledit ensemble monobloc réalisé dans le seul et unique matériau composite;
- l'autre tête de bielle comporte un embout;
- l'embout est en métal, en carbone ou en matériau plastique;
- elle est dépourvue de discontinuités et porosités dans toute section transversale et dans toute section longitudinale de l'ensemble monobloc.

### Brève description des figures

La figure 1, déjà mentionnée, représente le schéma général de bielles métalliques selon l'état de la technique avec différents moyens de fixation de la bielle.
La figure 2, déjà mentionnée, représente une coupe longitudinale d'une bielle composite selon l'état de la technique (sans les moyens de fixation).
La figure 3 représente une vue de face de la bielle composite selon l'invention.
La figure 4 représente une coupe longitudinale d'une des pièces constitutives du corps intérieur de la bielle selon l'invention ainsi qu'une vue d'une extrémité de cette pièce.
Les figures 5a et 5b représentent respectivement une vue du dessus et une vue de face d'un mandrin utilisé pour la réalisation du corps intérieur de la bielle selon l'invention.
La figure 6 illustre l'assemblage d'une des pièces constitutives du corps intérieur de la bielle selon l'invention avec un tube pour former un épaulement, ainsi qu'une demi-vue de l'assemblage.
La figure 7 représente une coupe longitudinale des différentes pièces constitutives du corps intérieur de la bielle selon l'invention après assemblage.
La figure 8 illustre le placement des tourillons aux extrémités du corps intérieur de la bielle selon l'invention.
La figure 9 illustre le placement des mors sur les tourillons de la figure 8.
La figure 10 illustre l'étape d'enroulement filamentaire autour du corps intérieur.
La figure 11 représente schématiquement l'empilement des couches de fils autour du corps intérieur avec des couches supplémentaires aux extrémités du corps intérieur.
La figure 12 représente une coupe longitudinale du corps intérieur et du corps extérieur de la bielle selon l'invention avant post-cuisson.
Les figures 13 et 14 représentent une coupe longitudinale du corps monobloc de la bielle selon l'invention après post-cuisson (respectivement avant et après retrait des tourillons).
La figure 15 représente une vue tridimensionnelle d'une extrémité de la bielle selon l'invention après usinage de l'élément de fixation.
La figure 16 illustre avec une vue tridimensionnelle la continuité de la fibre entre le corps de bielle et la tête de bielle.
La figure 17 illustre avec deux vues en coupe longitudinale l'étape d'assemblage, selon une variante de l'invention, d'un embout avec une extrémité de la pièce selon la figure 4.

### Légende

(1) Bielle
(2) Partie cylindrique de la bielle
(3) Tête de bielle
(4) Partie sensiblement conique
(5) Corps intérieur
(6) Première pièce
(7) Deuxième pièce
(8) Mandrin
(9) Partie cylindrique du mandrin
(10) Partie de raccordement du mandrin
(11) Partie de section rectangulaire du mandrin
(12) Epaulement
(13) Tube
(14) Corps extérieur
(15) Tourillon
(16) Mors
(17) Fibre pré-imprégnée
(18) Corps monobloc
(19) Elément de fixation
(20) Méplat
(21) Couche supplémentaire
(22) Embout

### Description détaillée de l'invention

La bielle composite 1 comporte une partie cylindrique creuse 2 reliant deux têtes de bielle 3 tel que montré à la figure 3. Les deux têtes de bielle 3 sont reliées à la partie cylindrique 2 par une partie sensiblement conique 4 de section croissante et d'épaisseur de paroi s'affinant depuis la tête 3 vers la partie cylindrique 2, les parties sensiblement coniques 4 et la partie cylindrique 2 formant le corps de bielle.

Une ou les deux têtes de bielle sont réalisées dans un même matériau que le corps de bielle et se présentent sous forme d'un élément de fixation, de type fourche par exemple. L'ensemble partie cylindrique 2, parties coniques 4 et têtes de bielle 3 forment alors une bielle monobloc 1. On entend par monobloc que toute la bielle est réalisée dans un seul et unique matériau composite sans apport d'autres matériaux tels que de la colle, de l'adhésif ou du tissu de verre. Cela signifie que la structure est homogène (sans discontinuité) sur toute la section verticale ou longitudinale de la bielle quel que soit l'endroit où la coupe est effectuée. La structure homogène est ainsi dépourvue de plan de joint, de défaut de jonction ou de défaut d'interface. Par extension, on parlera également de bielle monobloc pour une bielle où seule une tête de bielle fait partie intégrante de la bielle et est ainsi réalisée dans un même matériau que le corps de bielle, l'autre tête comportant un embout rapporté comme décrit dans la demande WO 2010/149768 A2. Dans ce cas, l'élément de fixation peut faire partie intégrante de l'embout rapporté ou ce dernier peut être taraudé pour recevoir ultérieurement un élément de fixation. Cette variante du procédé sera également décrite dans la présente description.

Le procédé selon l'invention est d'abord illustré ci-dessous pour la fabrication d'une bielle monobloc comprenant deux têtes de bielle réalisées dans un même matériau que le corps de bielle.

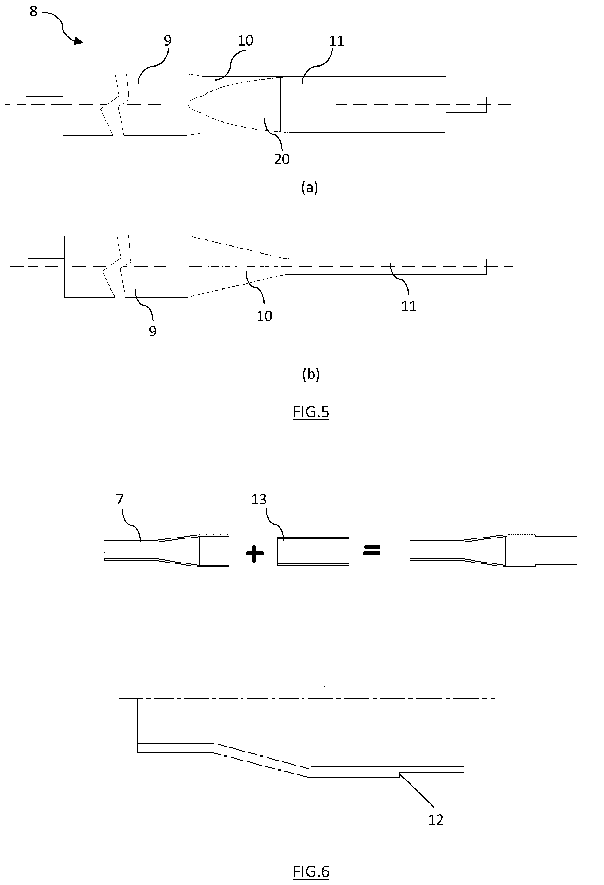

Une première étape a) consiste à réaliser un corps intérieur, aussi appelé mandrin perdu qui, comme son nom l'indique, sera perdu dans le produit final. Le corps intérieur est réalisé par assemblage de deux pièces 6,7, elles-mêmes réalisées comme suit. On réalise une première pièce 6 telle que montrée à la figure 4, par le procédé traditionnel d'enroulement filamentaire qui consiste à enrouler une fibre pré-imprégnée sur un mandrin (enroulement non représenté sur les figures), à la consolider par polymérisation partielle et ensuite à retirer le mandrin. Le mandrin 8, représenté aux figures 5a et 5b, présente une partie cylindrique 9 de forme sensiblement correspondante à celle de la bielle, prolongée par une partie de raccordement 10 correspondant à la partie sensiblement conique 4 de la bielle et terminée par une partie de section rectangulaire 11 destinée à réaliser la tête de bielle sous forme d'élément de fixation. La partie de raccordement 10 présente sur ses faces supérieure et inférieure un méplat 20 s'étendant dans trois plans successifs (voir Fig.5a).

Une deuxième pièce 7 est également réalisée par enroulement filamentaire autour du mandrin 8 et partiellement polymérisée, le mandrin étant retiré après la polymérisation partielle. On précisera que les deux pièces 6 et 7 peuvent avoir une partie cylindrique de longueur variable selon les besoins. Par exemple, la première pièce peut comporter une partie cylindrique de longueur supérieure à celle de la seconde pièce.

Un épaulement 12 est ensuite ménagé au niveau de la partie cylindrique de la deuxième pièce 7. L'épaulement 12 est formé par ajout d'un tube 13 à l'intérieur de la partie cylindrique jusqu'à butée sur la partie conique comme montré à la figure 6, le tube ayant bien entendu un diamètre extérieur légèrement inférieur à celui du diamètre intérieur de la partie cylindrique. Selon l'invention, le tube a été préalablement réalisé par la méthode d'enroulement filamentaire et partiellement polymérisé. Afin de réaliser un corps monobloc au sens de l'invention, la fibre pré-imprégnée utilisée pour la fabrication du tube est la même que celle utilisée pour les pièces 6 et 7. En outre, le tube est de préférence revêtu d'une couche de résine identique à celle des fibres pré-imprégnées avant insertion dans la deuxième pièce et assemblage avec la première pièce. Ce revêtement a pour objet d'éviter la formation de porosité entre les pièces 6 et 7 et le tube 13, permettant ainsi d'obtenir une bielle monobloc au sens de l'invention.

En variante, l'épaulement 12 peut être usiné dans la deuxième pièce 7 plutôt que formé via l'insertion d'un tube.

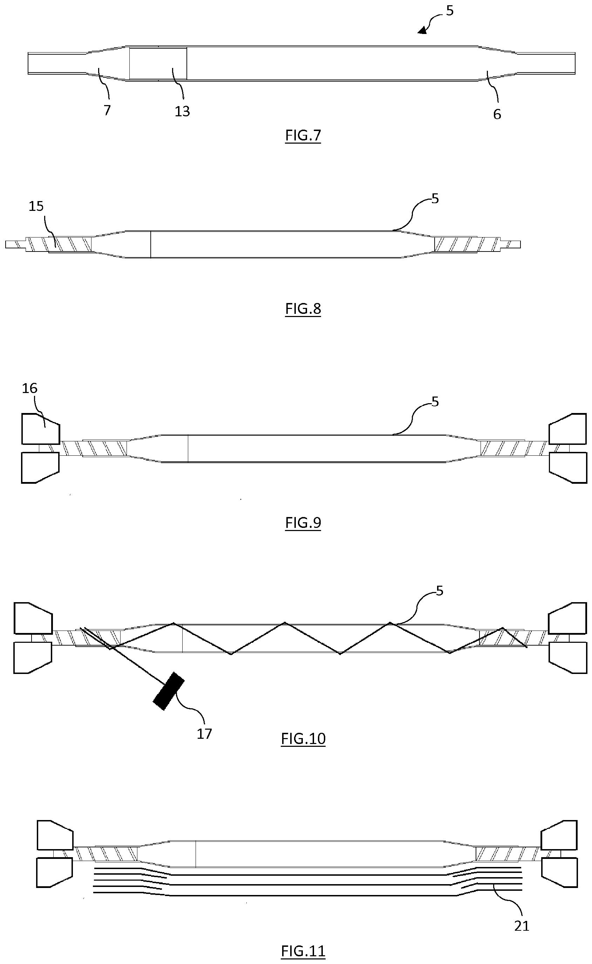

Les deux pièces 6,7 sont ensuite assemblées, la première pièce 6 prenant appui sur l'épaulement 12 de la deuxième pièce 7 (voir Fig.7).

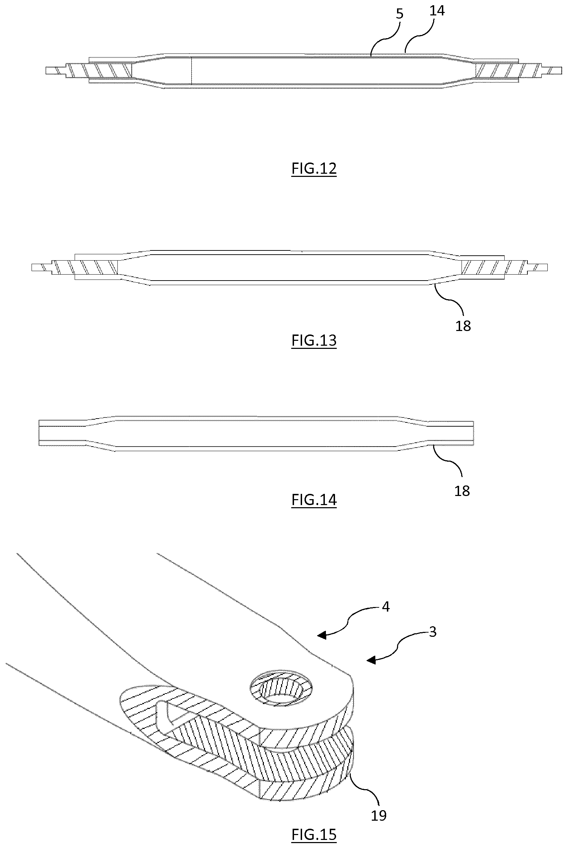

Une deuxième étape b) consiste à réaliser un corps extérieur 14 autour du corps intérieur 5 tel que montré à la figure 12. Pour ce faire, après placement des tourillons 15 et mors 16 aux extrémités du corps intérieur pour le montage de ce dernier sur la machine d'enroulement filamentaire, on enroule la fibre pré-imprégnée 17 sur l'ensemble du corps intérieur 5 (voir Fig.8 à 10). Selon l'invention, la fibre pré-imprégnée utilisée pour la fabrication du corps intérieur et du corps extérieur est la même (même fibre, même résine) afin de réaliser au final un produit sans discontinuité entre les deux corps. Pour obtenir les épaisseurs voulues au niveau des têtes de bielle, des couches supplémentaires 21 peuvent être placées aux extrémités du corps intérieur 5 tel que montré à la figure 11. Les couches supplémentaires 21 peuvent être placées au niveau des têtes de bielles de section rectangulaires et partiellement au niveau de la partie de raccordement. Par ajout de couches successives de fibres le long du corps intérieur, on obtient la forme extérieure finie du corps de bielle comme montré à la figure 12. Pour renforcer les propriétés mécaniques de la bielle obtenue, l'angle d'enroulement peut être modifié aux extrémités.

Dans une troisième étape c), le corps extérieur 14 et le corps intérieur 5 sont polymérisés pour obtenir un corps monobloc 18 où les corps intérieur et extérieur ne forment plus qu'un, sans discontinuité ou porosité à l'interface entre les deux corps (voir Fig.13 et 14). Ainsi, en coupe, il n'est plus possible de discerner le corps intérieur du corps extérieur.

Dans une quatrième étape d), l'élément de fixation 19 est usiné dans chaque tête de bielle 3 et en partie dans la portion conique 4 (voir Fig.15). L'ensemble des zones hachurées délimite les parties usinées pour former au final une bielle monobloc tel qu'illustré précédemment à la figure 3, avec à chaque extrémité une fourche. En variante, seules les zones externes avec des hachures plus espacées peuvent être usinées auquel cas, un autre type d'élément de fixation est réalisé.

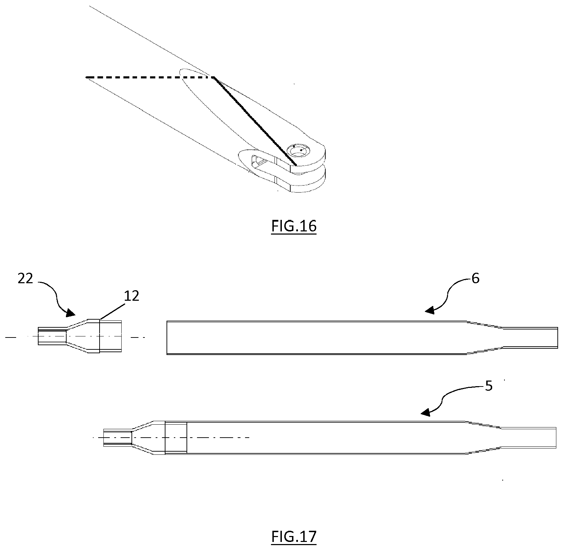

Le procédé de fabrication de la bielle tel que décrit ci-dessus doit être adapté lorsque seule une tête de bielle est usinée pour former un élément de fixation, l'autre tête comportant un embout rapporté. Selon cette variante, dans la première étape a), un embout 22 muni d'un épaulement 12 est rapporté à l'extrémité de section circulaire de la pièce constitutive 6 (voir Fig.17). L'embout peut être métallique, en matériau plastique à haute résistance, en carbone ou dans tout autre matériau approprié pour l'application visée. Comme déjà mentionné, l'embout peut être taraudé pour recevoir ultérieurement un élément de fixation ou peut directement comporter un élément de fixation.

L'assemblage de la pièce 6 avec l'embout 22 forme le corps intérieur 5 autour duquel, dans l'étape b), la fibre pré-imprégnée est enroulée pour former le corps extérieur de manière similaire au procédé décrit précédemment. L'étape c) est également équivalente. Dans la quatrième étape d), l'élément de fixation est usiné comme précédemment dans la seule tête de bielle de section rectangulaire.

On précisera que, dans les deux variantes du procédé, les formes du mandrin, du corps de bielle et des têtes de bielles sont données à titre illustratif. La partie dite "cylindrique" de la bielle peut être de section autre que circulaire telle qu'ovoïde, carrée, etc., la forme du mandrin étant en conséquence modifiée. Il en est de même pour la partie dite "sensiblement conique" et les têtes de bielle de section rectangulaire avant usinage des éléments de fixation. De même, les têtes de bielle ont été représentées, après usinage, sous forme de fourche mais selon les besoins, elles peuvent revêtir d'autres formes.

Selon l'invention, les fibres sont préférentiellement des fibres de carbone et la résine doit être choisie pour assurer une rigidité suffisante à l'ensemble des pièces constitutives de la bielle avant l'étape c) de post-cuisson. Par exemple, il peut s'agir d'une résine époxy.

### Avantages du procédé selon l'invention

- Selon la présente invention, l'ensemble de la bielle, y compris le ou les éléments de fixation sont réalisés avec une même fibre pré-imprégnée. L'utilisation d'une même résine et d'une même fibre permet de réaliser un corps monobloc, lors de la post-cuisson à l'étape c), qui sera exempt de tout problème de dilation thermique différentielle.
- La fabrication de bielles intégrant les éléments de fixation permet de réduire les coûts puisqu'il n'est plus nécessaire de rapporter ces derniers lors d'une étape supplémentaire.
- La réalisation d'une bielle tout en composite permet d'alléger le poids par rapport à une bielle avec embouts métalliques rapportés.
- Comme montré à la figure 16, la fibre est continue entre le corps de bielle et la fourche. Cela permet d'améliorer la tenue en fatigue car lorsque les fourches sont sollicitées mécaniquement, c'est la fibre du corps de bielle qui reprend l'effort.
- Le procédé selon l'invention est flexible. Il permet de réaliser une bielle comprenant à une extrémité un élément de fixation et à une autre extrémité un embout taraudé dans lequel l'élément de fixation est vissé ultérieurement. Ce type de bielle présente l'avantage d'avoir une longueur variable (grâce au vissage) selon les besoins et l'espace disponible au sein de l'avion.
- Le procédé selon l'invention a également pour avantage de permettre la réalisation d'une pièce complexe par des procédés traditionnels d'enroulement filamentaire, ce qui génère des coûts de fabrication faibles. Le gain se situe dans la mise en oeuvre des procédés et dans la conception elle-même de la bielle.
- Le procédé selon l'invention ne nécessite pas de noyau fusible. Cela permet:
   - de réduire les coûts de fabrication ;
   - de fabriquer des bielles avec un rapport diamètre/longueur faible sans effondrement et flexion du mandrin ;
   - de fabriquer des bielles avec un entraxe faible au niveau des fourches, pouvant descendre jusqu'à 3 mm ;
   - d'obtenir un meilleur fini de surface à l'intérieur de la bielle et, en conséquence, une meilleure réception du signal lors d'un contrôle ultrason.

## Revendications

1. Procédé de fabrication d'une bielle (1) par enroulement filamentaire, ledit procédé comprenant les étapes de:
- mise à disposition d'un mandrin (8) ;
- réalisation d'un corps intérieur (5) par:
- fabrication d'une première pièce (6) par enroulement de fibres pré-imprégnées (17) autour dudit mandrin (8);
- retrait du mandrin (8);
- assemblage de la première pièce (6) avec une seconde pièce (7,22);
- réalisation d'un corps extérieur (14) par enroulement de fibres pré-imprégnées (17) autour dudit corps intérieur (5), lesdites fibres pré-imprégnées (17) étant identiques à celles utilisées lors de la fabrication de la première pièce (6);
- réalisation d'un corps monobloc (18) par polymérisation de l'ensemble formé du corps intérieur (5) et du corps extérieur (14);
- usinage d'un élément de fixation (19) à une extrémité du corps monobloc (18).

2. Procédé selon la revendication 1, dans lequel la seconde pièce (7) est également réalisée par enroulement de fibres pré-imprégnées (17) autour dudit mandrin (8), lesdites fibres pré-imprégnées (17) étant identiques à celles utilisées lors de la fabrication de la première pièce (6) et du corps extérieur (14).

3. Procédé selon la revendication 1 ou 2, comprenant une étape de réalisation d'un épaulement (12) dans la seconde pièce (7), ledit épaulement (12) servant d'appui lors de l'assemblage avec la première pièce (6).

4. Procédé selon la revendication 3, dans lequel un tube (13) est inséré dans la seconde pièce (7) pour former l'épaulement (12), ledit tube (13) étant fabriqué par la méthode d'enroulement filamentaire utilisant des fibres pré-imprégnées (17) identiques à celles utilisées pour le corps intérieur (5) et le corps extérieur (14).

5. Procédé selon la revendication 4, dans lequel le tube (13) est revêtu d'une couche de résine avant insertion dans la seconde pièce (7), ladite résine étant identique à celle des fibres pré-imprégnées utilisées lors de la réalisation des corps intérieur (5) et extérieur (14).

6. Procédé selon l'une quelconque des revendications précédentes, dans lequel au moins la première pièce (6) est partiellement polymérisée avant assemblage.

7. Procédé selon l'une quelconque des revendications précédentes, dans lequel des couches supplémentaires (21) de fibres pré-imprégnées (17) sont enroulées sur une extrémité ou les deux extrémités du corps intérieur (5) lors de la réalisation du corps extérieur (14).

8. Procédé selon l'une quelconque des revendications précédentes, comprenant une étape d'usinage d'un élément de fixation (19) à l'autre extrémité du corps monobloc (18).

9. Procédé selon la revendication 1 ou 7, dans lequel la seconde pièce est un embout (22) muni d'un épaulement (12) servant d'appui lors de l'assemblage avec la première pièce (6).

10. Procédé selon l'une quelconque des revendications précédentes, dans lequel l'angle d'enroulement filamentaire est variable le long du corps intérieur (5) lors de la réalisation du corps extérieur (14).

11. Procédé selon l'une quelconque des revendications précédentes, dans lequel le mandrin (8) comporte une partie cylindrique (9) reliée à une partie de section rectangulaire (11) par une partie de raccordement (10).

## Patentansprüche

1. Verfahren zur Herstellung einer Pleuelstange (1) durch fadenförmigen Wickeln, umfassend die Schritte:
- Vorsehen eines Dorns (8);
- Herstellen eines Grundkörpers (5) durch:
- Herstellen eines ersten Teils (6) durch Wickeln von vorimprägnierten Fasern (17) um den besagten Dorn (8) herum;
- Zurückziehen des Dorns (8);
- Zusammenbauen des ersten Teils (6) mit einem zweiten Teil (7, 22);
- Herstellen eines Außenkörpers (14) durch Wickeln von vorimprägnierten Fasern (17) um den besagten Grundkörper (5) herum, wobei die vorimprägnierten Fasern (17) mit den bei der Herstellung des ersten Teils (6) verwendeten Fasern identisch sind;
- Herstellen eines einteiligen Körpers (18) durch Polymerisieren der aus dem Grundkörper (5) und dem Außenkörper (14) bestehenden Baueinheit;
- Bearbeitung eines Befestigungselements (19) an einem Ende des einteiligen Körpers (18).

2. Verfahren nach Anspruch 1, wobei das zweite Teil (7) ebenfalls durch Wickeln von vorimprägnierten Fasern (17) um den besagten Dorn (8) herum hergestellt wird, wobei die besagten vorimprägnierten Fasern (17) mit den bei der Herstellung des ersten Teils (6) und des Außenkörpers (14) verwendeten Fasern identisch sind.

3. Verfahren nach Anspruch 1 oder 2, umfassend einen Schritt des Herstellens einer Schulter (12) im zweiten Teil (7), wobei die besagte Schulter (12) bei der Zusammenstellung mit dem ersten Teil (6) als Stütze fungiert.

4. Verfahren nach Anspruch 3, wobei ein Rohr (13) ins zweite Teil (7) eingeführt wird, um die Schulter (12) zu bilden, wobei das besagte Rohr (13) durch das Fadenwickelverfahren unter Verwendung von vorimprägnierten Fasern (17), die mit den beim Grundkörper (5) und dem Außenkörper (14) verwendeten Fasern identisch sind, hergestellt wird.

5. Verfahren nach Anspruch 4, wobei das Rohr (13) vor dem Einführen ins zweite Teil (7) mit einer Harzschicht beschicht wird, wobei das besagte Harz mit dem der bei der Herstellung des Grundkörpers (5) und des Außenkörpers (14) verwendeten vorimprägnierten Fasern identisch ist.

6. Verfahren nach irgendeinem der vorstehenden Ansprüche, wobei mindestens das erste Teil (6) vor dem Zusammenbau teilweise polymerisiert wird.

7. Verfahren nach irgendeinem der vorstehenden Ansprüche, wobei die zusätzlichen Schichten (21) von vorimprägnierten Fasern (17) bei der Herstellung des Außenkörpers (14) an einem Ende oder an beiden Enden des Grundkörpers (5) gewickelt werden.

8. Verfahren nach irgendeinem der vorstehenden Ansprüche, umfassend einen Schritt der Bearbeitung eines Befestigungselements (19) am anderen Ende des einteiligen Körpers (18).

9. Verfahren nach Anspruch 1 oder 7, wobei das zweite Teil ein Endstück (22) ist, das mit einer Schulter (12) versehen ist, die bei der Zusammenstellung mit dem ersten Teil (6) als Stütze fungiert.

10. Verfahren nach irgendeinem der vorstehenden Ansprüche, wobei der Winkel des fadenförmigen Wickeln bei der Herstellung des Außenkörpers (5) entlang dem Grundkörper (14) variiert.

11. Verfahren nach irgendeinem der vorstehenden Ansprüche, wobei der Dorn (8) einen zylindrischen Teil (9) umfasst, der über ein Verbindungsteil (10) mit einem Teil mit rechteckigem Querschnitt (11) verbunden ist.

## Claims

1. Method for manufacturing a connecting rod (1) by filament winding, said method comprising the following steps:
- providing a mandrel (8);
- producing an inner body (5) by:
- manufacturing a first part (6) by winding pre-impregnated fibers (17) around said mandrel (8);
- removing the mandrel (8);
- assembling the first part (6) with a second part (7, 22);
- producing an outer body (14) by winding pre-impregnated fibers (17) around said inner body (5), said pre-impregnated fibers (17) being identical to those used during the manufacturing of the first part (6);
- producing a one-piece body (18) by polymerizing the assembly formed by the inner body (5) and the outer body (14);
- machining a fastening element (19) at one end of the one-piece body (18).

2. Method according to claim 1, wherein the second part (7) is also made by winding pre-impregnated fibers (17) around said mandrel (8), said pre-impregnated fibers (17) being identical to those used during the manufacturing of the first part (6) and the outer body (14).

3. Method according to claim 1 or 2, comprising a step for producing a shoulder (12) in the second part (7), said shoulder (12) serving as support during the assembly with the first part (6).

4. Method according to claim 3, wherein a tube (13) is inserted into the second part (7) to form the shoulder (12), said tube (13) being manufactured by the filament winding method using pre-impregnated fibers (17) identical to those used for the inner body (5) and the outer body (14).

5. Method according to claim 4, wherein the tube (13) is coated with a layer of resin before insertion into the second part (7), said resin being identical to that of the pre-impregnated fibers used during the production of the inner (5) and outer (14) bodies.

6. Method according to any one of the preceding claims, wherein at least the first part (6) is partially polymerized before assembly.

7. Method according to any one of the preceding claims, wherein the additional layers (21) of pre-impregnated fibers (17) are wound on one end or both ends of the inner body (5) during the production of the outer body (14).

8. Method according to any one of the preceding claims, comprising a step for machining a fastening element (19) at the other end of the one-piece body (18).

9. Method according to claim 1 or 7, wherein the second part is a tip (22) provided with a shoulder (12) serving as support during the assembly with the first part (6).

10. Method according to any one of the preceding claims, wherein the filament winding angle is variable along the inner body (5) during the production of the outer body (14).

11. Method according to any one of the preceding claims, wherein the mandrel (8) includes a cylindrical part (9) connected to a part of rectangular section (11) by a connecting part (10).
